# EUROPEAN PATENT SPECIFICATION

(11) **EP 4 477 630 B1**
(45) Date of publication and mention of the grant of the patent: **31.12.2025**
(21) Application number: 23179793.7
(22) Date of filing: 16.06.2023
(51) Int. Cl.: C04B 7/36

(54) **METHOD AND APPARATUS FOR MANUFACTURING CEMENT CLINKER**
VERFAHREN UND VORRICHTUNG ZUR HERSTELLUNG VON ZEMENTKLINKER
PROCÉDÉ ET DISPOSITIF POUR LA FABRICATION DE CLINKER DE CIMENT

(43) Date of publication of application: 18.12.2024
(73) Proprietor: Südbayerisches Portland-Zementwerk Gebr. Wiesböck & Co. GmbH, 83101 Rohrdorf (DE)
(72) Inventor: Leibinger, Helmut, 83101 Rohrdorf (DE); Stadler, Philipp, 83101 Rohrdorf (DE); Staude, Dominik, 83101 Rohrdorf (DE)
(74) Representative: Lohr, Jöstingmeier & Partner Patent- und Rechtsanwälte mbB

(56) References cited:
- CN-A- 112 645 618
- HEIKAL MOHAMED: "Effect of calcium formate as an accelerator on the physicochemical and mechanical properties of pozzolanic cement pastes", vol. 34, no. 6, 1 June 2004 (2004-06-01), US, pages 1051 - 1056, XP093105713, ISSN: 0008-8846, Retrieved from the Internet <URL:https://www.sciencedirect.com/science/article/pii/S0008884603004113/pdfft?md5=689cc14e20f56f66dafdb750fb988407&pid=1-s2.0-S0008884603004113-main.pdf> [retrieved on 20231127], DOI: 10.1016/j.cemconres.2003.11.015
- BILTON M ET AL: "Investigating the optimum conditions for the formation of calcium oxide, used for CO2 sequestration, by thermal decomposition of calcium acetate", JOURNAL OF PHYSICS: CONFERENCE SERIES, INSTITUTE OF PHYSICS PUBLISHING, BRISTOL, GB, vol. 371, no. 1, 2 July 2012 (2012-07-02), pages 12075, XP020226162, ISSN: 1742-6596, DOI: 10.1088/1742-6596/371/1/012075

## Description

### Field of the invention

The invention relates to a method and an apparatus for manufacture of calcium oxide (CaO), in particular to a method and an apparatus for recycling a hydrated cement comprising material, calcium-containing slags, and minerals such as anorthite and wollastonite.

### Description of the related art

Cement clinker (herein "clinker", for short) is an important intermediate product for the cement and hence the concrete production. The clinker is ground and further processed to cement by adding small amounts of gypsum (typical 3-7%) and/or calcium sulfate. The cement is subsequently mixed in a concrete plant with aggregates (e.g., crushed stone, gravel, sand) and water to concrete. In some implementations the water is added at later at the construction site. In any case the concrete is mostly used in building construction. Usage of concrete is presently under criticism due to environmental impact of the clinker production.

Concrete is a composite composed of fine and coarse aggregates bonded together in a cement matrix. Initially the aggregates, cement and water are mixed to obtain a slurry that can be molded into a predefined shape. The slurry cures and in this process hardens over time to thereby provide concrete. This hardening is based on a crystallization of hydrated cement constituents in particular alite (Ca₃SiO₅), belite (Ca₂SiO₄), tri calcium aluminate (3CaOAl₂O₃), tetra calcium aluminate ferrite (4CaO(Al₂O₃, Fe₂O₃)) and free calcium oxide. Hydration of alite and belite provides (CaO) (SiO2)·(H2O)(gel) and Ca(OH)₂ (Portlandite). Crystallization of the hydrated cement constituents provides for the high compressive strength of hardened concrete, but still is not fully understood (see e.g., R. Dodge Woodson, Concrete Portable Handbook, Elsevier Amsterdam, 2012, page 220). It appears to be well accepted that the hydration reactions are irreversible (see e.g. https://en.wikipedia.org/wiki/Concrete, retrieved on May 03^{rd}, 2023), which is considered to inhibit concrete or at least cement recycling. In addition, concrete recycling is commonly inhibited by the dilution of calcium oxide. The dilution appears as a barrier to process concrete to a high-calcium content raw meal for clinker production.

However, demolition of buildings provides large amounts of concrete. So far, this concrete has been crushed and landfilled or used in street construction to replace crushed stone.

The presently used process to manufacture clinker involves calcining limestone (CaCO₃) to quicklime (essentially calcium oxide (CaO)) and subsequently sintering the quicklime with clay to cement clinker. The limestone and the clay are quarried, dried and ground to a so-called raw meal. The raw meal is then calcined and sintered to clinker. The process is well known and has been optimized over decades.

While being highly efficient from an economic perspective, the clinker process has a remarkable environmental impact: The most prominent is the carbon dioxide (CO₂) emission (see: European Commission, Joint Research Centre: Deep decarbonisation of industry: The cement sector; available at https://setis.ec.europa.eu/system/files/2021-02/irc120570 decarbonisation of cement fact sheet 2.pdf, retrieved April 25, 2023) but the environmental impact of the quarries for obtaining the raw materials limestone and clay is significant as well and renders it increasingly difficult to obtain licenses for exploitation of corresponding deposits.

Presently, the cement clinker industry is developing processes for carbon capture and storage (CSS) based on oxy-fuel technologies or calcium looping or both (for a summary, see Mai Bui, Niall Mac Dowell: Carbon Capture and Storage,·Royal Society of Chemistry (2019), ISBN: 9781839160523, 1839160527)
An inherent problem of the cement clinker production is that calcination of 1 Mol CaCO₃ to 1 Mol CaO releases 1Mol CO₂ - not including CO₂ emissions for heating the limestone to its decomposition temperature and not including CO₂ emissions for sintering precalcined raw meal. The CO₂ emissions for heating the limestone to its decomposition temperature and for sintering precalcined raw meal can at least in principle be avoided by using sustainable fuels and/or so-called green electricity, but the inherent stoichiometric CO₂ release of the decarbonization of CaCO₃ cannot be fully avoided yet when producing cement clinker.

To avoid the CO₂ -emission due to the calcination of CaCO₃ it has been suggested to blend cement clinker with pozzolans. However, pozzolans based concrete is believed to require clinker to cure or at least to speed up curing of pozzolane-based concrete.

CN 112645618 A relates to a concrete recycling method.

BILTON M ET AL: "Investigating the optimum conditions for the formation of calcium oxide, used for CO2 sequestration, by thermal decomposition of calcium acetate", JOURNAL OF PHYSICS: CONFERENCE SERIES, INSTITUTE OF PHYSICS PUBLISHING, BRISTOL, GB, vol. 371, no. 1, 2 July 2012 (2012-07-02), page 12075, XP020226162, ISSN: 1742-6596, DOI: 10.1088/1742-6596/371/1/012075) is a fundamental research paper aiming for an improvement in the field CO₂ sequestration.

### Summary of the invention

The problem to be solved by the invention is to reduce the environmental impact of concrete usage.

Solutions to the problem are described in the independent claims. The dependent claims relate to further improvements of the invention.

A corresponding method comprises reacting hydrated cement with a first acid. The first acid is a carboxylic acid. In a particularly preferred example, the first acid is formic acid (HCOOH, systematic name methanoic acid). Instead or in addition to reacting hydrated cement, the reacting step may comprise reacting a calcium-containing slag and/or a calcium-containing minerals such as anorthite and wollastonite with the first acid. The mineral is of course preferably not limestone (CaCO₃) as the present invention seeks to reduce the usage of limestone and the associated CO₂-emission.

Hydrated cement is the hardened binding material in concrete and can be obtained, for example, by crushing concrete to thereby obtain crushed concrete. Herein we use the term crushed concrete as a vivid pars pro toto for a hydrated cement comprising material and/or calcium-containing slag material and/or a calcium comprising mineral such as anorthite and wollastonite.

Huge amounts of concrete are crushed by the demolition industry. In other words, crushed concrete is a product of demolition of existing buildings and thus a well available resource. Crushed concrete consists essentially of hydrated cement (a solid) and concrete aggregates like sand, gravel, crushed rock etc. Crushed concrete is thus a presently unused resource of decarbonized calcium oxide. By crushing concrete, the constituents of concrete can be mechanically released from each other - at least in part- and can be classified, e.g., by size in aggregates of different sizes, wherein hydrated cement is mostly comprised in the fraction with the smallest diameter. Chemically, the hydrated cement can be considered as to comprise mainly calcium salts. The first acid dissolves these calcium salts at least in part and converts these dissolved salts to the calcium salt of the corresponding acid. This calcium salt and other soluble continuants are comprised in a first fluid phase. For example, when using methanoic acid (HCOOH), calcium formate (Ca(HCOO)₂) is obtained. Other preferably organic acids may of course be used as well. Other examples for the first acid in are ethanoic acid (CH₃COOH), propionic acid (CH₃CH₂CO₂H), butanoic acid (CH₃CH₂CH₂CO₂H), pentanoic acid (CH₃(CH₂)₃COOH), hexanoic acid (CH₃(CH₂)₄COOH), heptanoic acid (CH₃(CH₂)₅COOH), octanoic acid (CH₃(CH₂)₆COOH), nonanoic acid (CH₃(CH₂)₇COOH), decanoic acid (CH₃(CH₂)₈COOH), oxalic acid (HO2C-CO2H), pyruvic acid (CH₃COCOOH), glyoxylic acid (OCHCOOH), glycolic acid (HOCH₂CO₂H). Generally, dicarbonic acids are as well suited. Particularly preferred are propanedioic acid (CH₂(COOH)₂), butanedioic acid ((CH₂)₂(CO₂H)₂), pentanedioic acid (C₃H₆(COOH)₂), hexanedioic acid (CH₂)₄(COOH)₂), 2,3-Dihydroxybutanedioic acid (HO₂CCH(OH)CH(OH)CO₂H). Even (preferably simple) amino acids with an isoelectric point at or below pH7 can be used. Examples for such amino acids are 2-aminobutanedioic acid(C₄H₇NO₄) and 2-Aminopentanedioic acid (C₅H₉NO₄). All these acids may as well be mixed in any appropriate ratio. The mixture is as well referred to as the first acid. The first acid may preferably further comprise water. At this place, we use the systematic IUPAC names instead of the preferred IUPAC names of these substances to ease potential translation of the application and the patent into other languages.

Depending on the acid the corresponding calcium carboxylate (Ca(RCOO)₂) is formed, as usual the R denotes an organic 'rest'. Only to provide an example, in case the first acid is or comprises methanoic acid Ca(HCOO)₂) is formed, i.e., the understanding of "organic rest" shall as well include the case in which calcium formate is formed.

The hydrated cement may as well comprise less reactive and thus at least essentially insoluble components like e.g., aluminum oxide (Al₂O₃), iron oxides (FeₓO_{y}), silicon dioxide (SiO₂). These essentially insoluble components form a first solid phase and may be removed (e.g., from the reactor) and used for other processes. But these may as well have an advantageous effect in a subsequent heating step. In yet another preferred example, these insoluble components may be added to raw meal (= a cement clinker precursor) prior to sintering it in a cement clinker kiln and/or added to cement and hence be recirculated.

At this point it is noted that the step of classifying the crushed concrete is not necessary. If the classification is omitted, the first solid phase may further comprise the aggregates comprised in the crushed concrete. As an advantage the calcium slip is reduced. The disadvantage is, however, the contamination of the aggregates with the acid and potential solution of soluble aggregates in the fluid phase. In particular in this case using methanoic acid has the advantage that CaCO₃, which is often comprised in aggregates of concrete dissolves much slower than hydrated CaO present in hydrated alite and hydrated belite. In the case in which the crushed concrete is not classified prior to subjecting the hydrated cement with the first acid, such classification of the at least essentially insoluble constituents (less reactive) is recommended at a later process step. The non dissolved and/or the non-reacted residue may be reused in concrete production as an aggregate. The term "less reactive" shall be understood to reference to the reactivity of the Ca-salt being dissolved in the first acid. The less reactive material hence dissolves not or slower in the first acid and is hence referred to as "insoluble".

As already explained, the hydrated cement may be obtained by classifying crushed concrete. The such obtained hydrated cement may serve as Ca-source to obtain CaO and the aggregates may be reused, e.g., as aggregates of new concrete in a concrete plant, i.e., as feedstock for a concrete plant.

The first fluid phase and accordingly the dissolved calcium salt is preferably concentrated, for example, in a concentrator. This may be obtained by heating the first fluid phase to a first elevated temperature. The first elevated temperature is preferably selected to be below the decomposition temperature of the dissolved calcium salt, but as will be explained below it may be above the decomposition temperature.

The step of concentrating the first fluid phase causes the calcium salt to precipitate and thus provides three results that can be separated easily as having different states of aggregation: A gaseous phase comprises the remaining first acid and water (vapor). A solid phase essentially consists of or at least comprises precipitated calcium salt. A fluid phase is a Na-, K-, Mg-salt rich brine.

The gaseous phase can be condensed, and the first acid can be recuperated to be used again in the reacting step, i.e., it can be used to dissolve calcium salts comprised in hydrated cement and to thereby convert these dissolved salts to the calcium salt of the first acid.

The Na-, K-, Mg-salt rich brine can be further processed or directly used: For example, if the first acid is methanic acid, the brine is rich on Natrium formate, calcium formate and/or Magnesium formate and can be e.g., used as a biodegradable deicing fluid in the aviation industry and/or for communal deicing.

The precipitated calcium salt can be either used and/or further treated as will be explained: For example, if methanoic acid has been used as first acid, the precipitated calcium salt is essentially and/or at least comprises calcium formate. Calcium formate can be used as an accelerator for pozzolane-based concrete, thereby reducing the amount of clinker being required and as well the CO₂-emission per ton of pozzolane-based concrete. Hence, in an example, the invention provides pozzolane-based cement in which clinker has been at least partially substituted by calcium formate. For example, the pozzolane-based cement may comprise at least 2% (by weight of dry substance) of calcium formate. Other example pozzolane based cement mixtures may comprise an amount of at least *x%* (by weight of dry substance), wherein *x* can be selected from a set *X =* {2,4, 5,7.5, 10, 12,5, 15}, or in short *x* ∈ *X*) An upper limit of the amount of calcium formate can be considered to be 25% (by weight of dry substance)For example, such pozzolane based cement may comprise at least one of 40-60% cement clinker, 0,5-5% calcium formate, 0-5% calcium-sulfate and/or 54,5% - 34,5% pozzolane. In a preferred example, all these components are present in their respective indicated relative amounts.

At least a portion of the calcium salt is heated to the decomposition temperature of the precipitated calcium salt. This heating provides a second solid phase comprising (essentially, or to a large extent) CaO and a fluid phase comprising at least CO₂ and an aldehyde corresponding to the first acid. Going back to the example of calcium formate, the thermal decomposition provides a second solid phase that mainly consist of CaO and a second fluid (gaseous) phase comprising at least CO₂ and formaldehyde, the chemical reaction can be written as:

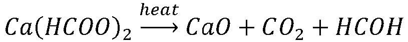

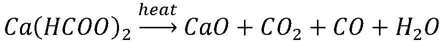

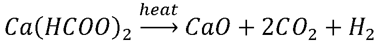

In the general case of calcium carboxylate these read:

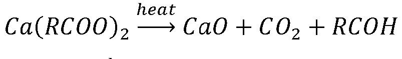

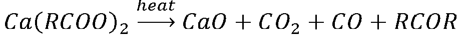

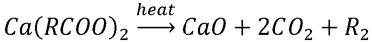

During the heating process being described above, gaseous side products, in particular CO₂ and CO are preferably withdrawn from the process, and hence from the CaO, to thereby reduce, if not fully avoid unintended re-carbonation of the CaO to CaCO₃. Further, the above-described optional removal of gaseous H₂O reduces the possibility for the formation of CO₂, CO and H₂. The amount of these side products may hence be kept small, and the main products are CaO and the aldehyde (e.g., H₂CO (formaldehyde) or more generally RCOH and RCOR (ketone)).

The second solid phase which consists to a large extent of the CaO obtained in the heating step can be separated from the fluid phase, e.g., using a deduster (e.g., a cyclone, a filter, a precipitator, ...).

The required decomposition temperature depends on the organic rest R. In the calcium formate example, the rest R is the formate having a decomposition temperature well above 400°C (Fletcher reports decomposition of Formaldehyde at 569°C, Fletcher C. J. M. 1934, The thermal decomposition of formaldehyde Proc. R. Soc. Lond. A 146: 357-362 http://doi.org/10.1098/rspa.1934.0160). Calcium formate decomposition starts at approximately 400°C, hence it is favorable to select the temperature to be at or above 380°C, but well below the sintering temperature of the CaO and the formate' s decomposition temperature. Heating to the sintering temperature of 1350°C to 1550°C in the presence of SiO₂, Al₂O₃ and/or Fe₂O₃ would provide cement clinker and is thus possible, if cement clinker is intended as a final product, but the aldehyde would be either burnt or pyrolyzed, depending on the process conditions. Instead, the aldehyde obtained by the reactions above is withdrawn prior to the optional step of sintering the CaO being a major constituent in calcined cement clinker raw meal. The such obtained aldehyde(s) can be used as valuable starting materials in the chemical industry, e.g., to manufacture polymers. These aldehydes essentially bind the carbon, which otherwise would have been emitted as CO₂ and at the same time are a secondary product of the cement recycling process.

It is noted that the literature on thermal decomposition of calcium carboxylates generally reports a decomposition of calcium carboxylates to CaCO₃ (see e.g. A. Valor et al. Thermal decomposition of the calcium salts of several carboxylic acids; Thermochimica Acta 389 (2002), p. 133-130; https://doi.org/10.1016/S0040-6031(02)00010-2). However, by removing the gaseous components of the decomposition reaction (being described above), the formation of the CaCO₃ can be almost fully avoided. Another aspect is the presence of H₂O which favors the decomposition of the Ca carboxylates to Ca hydroxide (Ca(OH)₂, which can be dehydrated to CaO. Further, the presence of acidic oxides like (*SiO*₂,*Al₂O₃*, ...), which are usually present in the hydrated cement (see above) are found to suppress recarbonization of CaO to CaCO₃. In other words the method step of converting the calcium salt obtained in the reacting step, into calcined raw meal by thermally decomposing the obtained Ca(RCOO)₂ and/or Ca(RSO₂O)₂ to thereby obtain at least CaO, CO₂ and RCOH and/or RCOR, respectively, may preferably take place in the presence of acidic oxides like for example *SiO*₂,*Al₂O*₃, *etc.* These are usually already present in crushed concrete, and thus further favor crushed concrete as source of hydrated cement.

As already apparent, the CaO obtained in the heating process can be used for example in a cement clinker manufacturing process and a corresponding line to replace at least a portion calcined raw meal stemming from a quarry. Natural resources can hence be reserved. In addition, the inherent CO₂-emission of the calcination step is omitted as well.

As already apparent, the aggregates being removed from the crushed concrete may as well be reused in the concrete mixing step. Potentially, the aggregates may need classification to ensure a given concrete quality, but in principle, the aggregates may be reused for the same purpose.

Preferably, the fluid comprising the dissolved calcium salt (the first fluid phase) and the first solid phase are separated prior to the optional step of heating the calcium-salt to the decomposition temperature of the calcium-salt and/or prior to the optional step of concentrating the fluid.

As already explained above, prior to the heating step or as an alternative the first fluid phase may be concentrated to thereby precipitate the calcium salt, collect first acid slip and to obtain the brine. Depending on the choice of the first acid, the calcium salt may be used in other industries and/or as an activation agent for pozzolane based cements. If used in a clinker manufacturing process, the optional concentration step reduces the energy being required for the decomposition of the calcium-salt.

In a preferred example, the CO₂ obtained by the decomposition of the calcium salt, may be dissolved in an electrolyte (e.g., in a second acid) and electrolytically converted to a third acid. Thereby, the CO₂ being released by converting the calcium salt to CaO can be used to produce a chemical feedstock. In a preferred example, at least two, particularly preferred all three of the first, second and third acid are chemically at least essentially identical. This measure significantly simplifies the entire process, as the number of chemicals to be handled and/or separated is significantly reduced. Following this approach, one may for example use methanoic acid as a first acid to dissolve the calcium salts comprised in the hydrated cement and thereby obtain dissolved calcium formate. The optional concentrating step provides (i.a.) precipitated calcium formate. Heating the (optionally precipitated) calcium formate provides CaO and, i.a., CO₂. This CO₂ can then be dissolved again in methanoic acid, and the dissolved CO₂ can be reduced electrolytically to methanoic acid. The such obtained methanoic acid may then be used in the reacting step. Of course, the methanoic acid being converted cannot be distinguished (chemically) from the formic acid being or forming a part of the electrolyte, but generally, the excess methanoic acid can be used as first acid to dissolve calcium salts of the hydrated cement. The other portion of the formic acid can be reused as CO₂-solvent (i.e., as second acid).

Examples for the second carboxylic acid, respectively, used in the dissolving step is at least one acid one of the acids comprised in the following list: methanoic acid (H₂CO₂), ethanoic acid (CH₃COOH), propionic acid (CH₃CH₂CO₂H), butanoic acid (CH₃CH₂CH₂CO₂H), pentanoic acid (CH₃(CH₂)₃COOH), hexanoic acid (CH₃(CH₂)₄COOH), heptanoic acid (CH₃(CH₂)₅COOH), octanoic acid (CH₃(CH₂)₆COOH), nonanoic acid (CH₃(CH₂)₇COOH), decanoic acid (CH₃(CH₂)₈COOH), Oxalic acid (HO₂C-CO₂H), Pyruvic acid (CH₃COCOOH), Glyoxylic acid (OCHCOOH), Glycolic acid (HOCH₂CO₂H). Optionally, Methane sulfonic acid (CH₃SO₃H) may be comprised in the first carboxylic acid as high boiling additive to adjust the pH, as it is a fully dissociating acid. Further, Methane sulfonic acid has a very high CO₂ solubility. These acids may as well be mixed in any appropriate ratio. The mixture is as well be referred to as first carboxylic acid. The first carboxylic acid may preferably further comprise water.

The above-described method provides CaO that can be used as a feedstock in many industrial applications, for example in the cement clinker industry. The CaO-rich phase obtained in the heating step may, for example, be fed to a cement clinker kiln, thereby allowing to manufacture cement clinker while avoiding the CO₂ emissions of calcining limestone. Further, the concrete obtained by demolition can essentially be entirely recycled to new concrete by adding the aggregates of the concrete to the cement clinker. The present invention hence opens a possibility to at least almost fully recycle hydrated cement and thus concrete, by producing the main component of the calcined cement clinker raw meal prior to the sintering step of a cement clinker process and line from another source than CaCO₃. After sintering, the such obtained clinker may again be used to produce new concrete using the aggregates obtained in the recycling process. In short, using the suggested process, natural resources of CaCO₃ are preserved by recycling concrete, further the inherent CO₂ production of the calcination step can be fully avoided.

An apparatus for manufacturing a calcium salt of a first acid and/or to obtain calcium oxide rich material may be suited to execute the above-described method and may comprise at least a reactor having a hydrated cement inlet and a first acid inlet. The reactor may further comprise a first solid phase outlet and a dissolved calcium salt fluid phase outlet. Preferably, the hydrated cement inlet is connected to a hydrated cement source. An example of a hydrated cement source can be, e.g., a classifier output, wherein the classifier output is configured to provide a hydrated cement comprising faction of crushed concrete. For example, a crushed concrete inlet of the classifier may be connected to a crushed concrete outlet of a crushed concrete source. The crushed concrete source can be any kind of concrete comminution machine, e.g. a concrete crusher. The classifier may hence have a crushed concrete inlet being connected to the crushed concrete source, a coarse material outlet and a fine material outlet. The fine material outlet may be used as hydrated cement source and may hence be connected to the corresponding inlet of the reactor.

The first acid source can be a first acid reservoir and/or a first acid manufacturing plant and/or an electrolytic cell configured to provide the first acid as explained herein.

As already apparent, herein, the term connection is to be understood as to provide a preferably but not necessarily continuous material stream from one entity to another. Typically, a connection can be provided by a conveyor, a conduit or any other appropriate conveying means, depending on the material stream to be conveyed. The connection may of course comprise storage means, e.g., tanks, bunkers, and the like as known to a person of skill in the art. Herein, we do not distinguish between streams and connections, as one implies the other. Both terms represent two aspects of the same technical teaching.

The apparatus may optionally comprise a concentrator. The concentrator may comprise a calcium salt solution inlet. The calcium salt solution inlet may be connected, e.g., with the dissolved calcium salt fluid phase outlet of the above-mentioned reactor. The concentrator preferably has at least one of the following outlets: A gas phase outlet, a fluid phase outlet and a solid phase outlet. The gas phase outlet may be configured to provide the first acid and/or water (vapor), preferably as a stream. The fluid phase outlet may be configured to provide a stream or batches of a brine, which may be rich of a Na-, and/or K-, and/or Mg-salt of the first acid. The solid phase outlet may be configured to provide a stream or batches comprising (preferably essentially) the calcium salt of the first acid.

The apparatus further comprises a heater having a calcium salt inlet. The calcium salt inlet may be a calcium salt fluid phase inlet. The dissolved calcium salt fluid phase inlet is preferably connected to the dissolved calcium salt fluid phase outlet of the first reactor. Alternatively or in addition, the heater may comprise a solid calcium salt inlet. The solid calcium salt inlet may be connected to the solid phase outlet of the optional concentrator. The heater further comprises a second fluid phase outlet and a CaO outlet. The heater may thus be configured to heat a calcium salt like Ca-formate to its decomposition temperature. The CaO thereby obtained forms a part of a CaO comprising solid phase and may be removed from the process (and/or used as described herein). The other products obtained in the heater may be in a gaseous phase and may be further processed. The heater is preferably configured to withdraw gaseous products from the solid material being heated to thereby reduce the chemical reaction towards the generation of CaO by removing CO₂, Aldehydes, H₂O, H₂ and the like. The Aldehyde(s) can be captured (e.g., by condensing it(them)) and are a valuable feedstock. The heater may further comprise an inert gas inlet to dilute the CO₂ and to thereby reduce formation of CaCO₃.

Preferably, the apparatus comprises a scrubber. The scrubber may comprise a CO₂ inlet, an electrolyte inlet and a CO₂ enriched electrolyte outlet. The CO₂ inlet may be connected to the second fluid phase outlet of the heater. Thereby, the CO₂ being produced in the heater, can be dissolved in the electrolyte. The electrolyte is or comprises preferably said second acid.

In particular, the scrubber may be configured to dissolve CO₂ received via the CO₂ inlet in the electrolyte being received via the electrolyte inlet and to provide a CO₂ enriched electrolyte at the CO₂ enriched electrolyte outlet.

The CO₂-inlet of the scrubber may be connected for example via a condenser to the second fluid phase outlet of the heater. The condenser may further comprise a condenser inlet being connected to the second fluid phase outlet. The condenser may further comprise and one or more liquid outlets (i.e., a condensed fluid outlets) and a gaseous fluid outlet (*"gas outlet"*) being connected to the CO₂ inlet. The condenser is preferably configured to cool the second fluid phase being received via the condenser inlet to a temperature at or below the condensation temperature of H₂O and/or the aldehyde, whichever condenses later, and above the condensation temperature of CO₂. The CO₂ may hence remain gaseous while the other main components of the second fluid phase are transferred to a liquid phase. The CO₂ may hence be separated from at least some other components being removed from the heater. Alternatively, as well the CO₂ may be condensed, but the constituents of the second fluid phase condensing at higher temperatures are preferably withdrawn during the process of cooling the second fluid phase down to thereby obtain (preferably at least essentially pure) CO₂.

Preferably, the apparatus further comprises an electrolytic cell. The electrolytic cell may comprise a CO₂ enriched electrolyte inlet. The CO₂ enriched electrolyte inlet may be connected to the CO₂ enriched electrolyte outlet of the scrubber or a CO₂ outlet of the optional condenser. The electrolytic cell may in addition comprise a CO₂ depleted electrolyte outlet. Accordingly, the electrolytic cell is preferably configured to convert CO₂ being received via the CO₂ enriched electrolyte inlet into a third acid being provided to the CO₂ depleted electrolyte outlet.

The CO₂ depleted electrolyte outlet may be connected to the (first) acid inlet of the reactor and/or to the electrolyte inlet of the scrubber and may hence be used as the second and/or the first acid.

Preferably, the CaO outlet of the heater and/or the first solid phase outlet are/is connected to a raw meal inlet of cement clinker kiln. The apparatus may hence be integrated in a cement clinker manufacturing line. Further, an optional coarse material outlet may be connected, optionally via a second classifier, to at least one aggregate inlet of an aggregate batcher of a concrete plant.

Crushed concrete shall be understood as a bulk material obtained by comminution of concrete by no matter which comminution process. In practice larger pieces of concrete as occurring during demolition of buildings are provided to a crusher, hence the term crushed concrete is vivid and shall not exclude concrete that has been, e.g., cut into pieces. In principle, the process does not require comminution of the concrete at all, as the first acid dissolves the hydrated cement, i.e., the concrete literally disintegrates during the reacting step. However, in practice comminution of the concrete is preferred.

Herein we use the term "xx-rich phase", "xx-rich liquid", "xx-rich compound". These terms are vivid for a skilled person in the respective context, but it may be problematic specify the meaning of rich in detail. In such examples the word "rich" shall be understood as "comprising" and may be replaced by "comprising". Usually "rich" means that the content of xx in the respective "xx-rich phase", "xx-rich liquid" and/or "xx-rich compound" is enriched compared to the educts of the corresponding prior step and/or to the other educts and/or the other products of the corresponding step.

In the following, the invention will be described by way of example, without limitation of the general inventive concept, on examples of embodiment with reference to the drawings.
Figure 1 shows a method and an apparatus for recycling hydrated cement.
Figure 2 shows flow diagram of another method and an apparatus for hydrated cement.

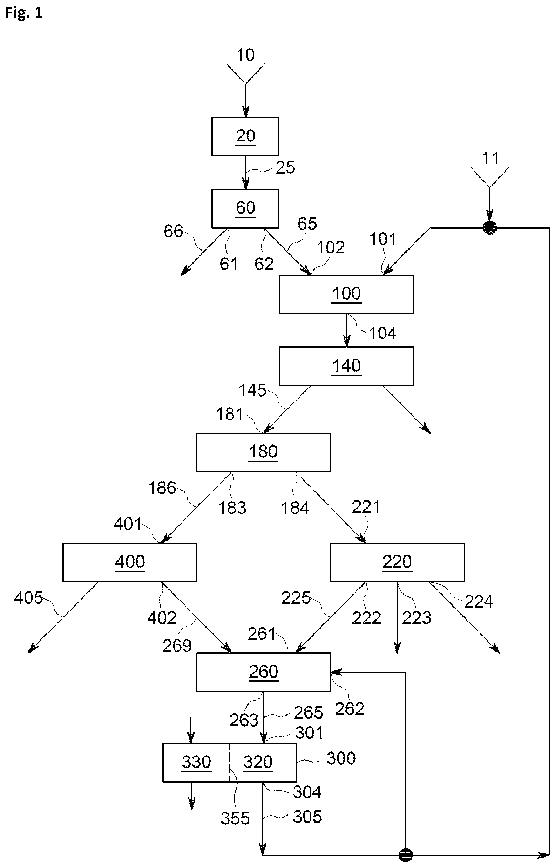

The method as shown in FIG. 1 may comprise, for example the step of providing hydrated cement and/or a calcium-containing slag and/or calcium containing mineral. This step may comprise the sub steps of crushing concrete 10 (e.g., by crusher 20 / crushing step 20) and/or a calcium-containing slag and/or calcium containing mineral to crushed material, hereinafter simply "crushed concrete 25" as a pars pro toto. The step may further comprise classifying the crushed concrete 25, e.g., by size. Thereby hydrated cement comprising phase and/or calcium salt comprising phase may be obtained. Classifying may take place may be obtained by an optional classifier 60. Such classifying usually provides, e.g., a hydrated cement rich (i.e., comprising) fraction 65 (as well referred to as Ca-rich fraction or calcium salt rich fraction) and optionally a coarser fraction 66 which coarser fraction may comprise concrete aggregates like sand, gravel, crushed rock, etc... This coarser fraction 66 may of course as well be classified by the size of its components.

An optional connection connects a hydrated cement outlet 61 (more generally a Ca-rich fraction outlet 61) of the classifier 60 with a hydrated cement inlet 102 (more generally a Ca-rich fraction inlet 102) of a reactor 100. Further, an optional connection enables to convey at least one aggregate rich (i.e., comprising) fraction 66 (the coarser fraction) to another entity, e.g., to a concrete plant, particularly preferred to an aggregate batcher of a concrete plant (e.g., via a second classifier).

In the reactor 100, the calcium salt rich fraction may be subjected to a first acid 11 to thereby dissolve the calcium salts and to convert them at least partially to the calcium salt of the acid. This is herein as well referred to as reacting step. The first acid 11 may be provided to the reactor 100 via a first acid inlet 101. In other words, hydrated cement may be contacted with a first acid 11, thereby obtaining a dissolved (preferably organic) calcium salt of the first acid (the first fluid phase 145) and/or a calcium-depleted first solid phase 146. In a preferred example, the first acid is or comprises methanoic acid.

The dissolved (preferably organic) calcium salt of the first acid and the calcium-depleted first solid phase may be removed from the reactor 100 via a reactor outlet 104 and may be provided to an optional separator 140 configured to separate the first fluid phase 145 from the first solid phase 146.

The calcium depleted first solid phase 146 may be withdrawn from the process and may be used, e.g., in a cement clinker kiln and/or a concrete plant or as a feedstock for other processes.

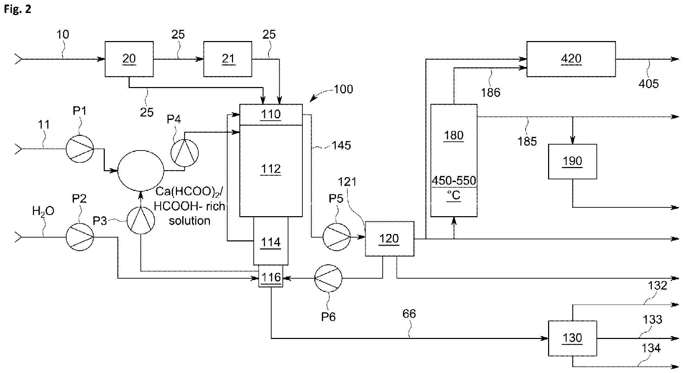

The dissolved calcium salt (i.e., the first fluid phase 145) is preferably provided via a connection to a heater 180. The connection may comprise a concentrator as will be explained with reference to FIG. 2.

The heater 180 may be electrically powered and/or may be powered by excess heat that may need to be removed from other processes of the corresponding factory. For example, kiln exhaust gas or heat being removed from a clinker cooler may be used in this process step as heat source. Not only in these cases, the heater 180 is preferably an indirect heat exchanger.

In the heater 180, the calcium salt may be heated to its thermal decomposition temperature, thereby obtaining at least a CaO-rich and/or a CaCO₃-rich second solid phase 186. Further, the reaction in the heater 180 may provide a second fluid phase 185 comprising at least one of H₂O, CO₂ and/or an aldehyde of the first acid. By removing and/or diluting the gaseous compounds the production of CaCO₃ can be reduced and instead more CaO can be obtained.

The second solid phase 186 may be removed via a CaO rich fraction outlet 183 (briefly CaO-outlet 183) and can be used, e.g., as a CaO-source of a cement clinker line and/or may be added to pozzolane based cement. Particularly preferred, the second solid phase 186 is provided via an optional connection to an optional cement clinker kiln inlet 401 of an optional cement clinker kiln 400.

The second fluid phase 185 may be gaseous. The second fluid phase 185 may be withdrawn from the heater 180 via a second fluid phase outlet 184 being connected to a second fluid phase inlet 221 of an optional condenser 220 to thereby separate a CO₂ rich gas from aldehydes and/or water. The CO₂ rich gas 225 may be provided via an optional connection to an optional scrubber 260. The optional scrubber 260 may have a CO₂ rich gas inlet 261 and a second acid inlet 262. The second acid inlet 262 may as well be referred to as electrolyte inlet 262. The scrubber 260 is preferably configured to dissolve the CO₂ obtained in the heating step in a second acid. The second acid may be provided to the scrubber via the second acid inlet 262. This second acid thus becomes a CO₂ enriched second acid and may be provided via another connection from a CO₂ enriched second acid outlet 226 to a CO₂-enriched second acid inlet 301 of an electrolytic cell 300. The CO₂ enriched second acid is hence a CO₂ enriched electrolyte 265 The electrolytic cell 300 may thus have a CO₂ enriched electrolyte inlet 301 and may be configured to convert the CO₂ to a third acid. A corresponding electrolytic cell 300 has been suggested in the application PCT/EP2023/054981 being incorporated herein as if fully disclosed. Preferably, the third acid is chemically identical (at least in part) to the first acid being used in the contacting step. Accordingly, in a preferred example at least a portion of the third acid 305 may be provided via a connection to the first acid inlet 101 of the reactor 100.

The optional electrolytic 300 cell may comprise an anode chamber 330 and a cathode chamber 320 being separated from each other by a membrane 355. In the optional cathode chamber 320, the dissolved CO₂ flow, i.e., the CO₂ rich electrolyte 265 (the second acid) is contacted with an optional cathode 225. Preferably, the dissolved CO₂ flows along the optional cathode or at least along a section of the cathode. The cathode may be of or comprise at least one of In, Sn, Hg, Bi, Pb, Cu and/or doped graphene. N-doped graphed is a preferred doped graphene. At the cathode, the dissolved CO₂ is reduced to a third acid. The third acid being produced by the reduction depends on the choice of the cathode. Preferably the cathode is a catalyst for reduction of the CO₂ to a carboxylic acid, preferably the same carboxylic or sulfonic acid as the first and/or second acid. In other words, the first acid and the second acid and the third acid are preferably identical. Cathode materials like for example Sn, Pb and Hg (while not excluding the other above mentioned example cathode materials) show a very low selectivity for a competitive hydrogen evolution reaction ("HER" 2*H⁺ +* 2*e⁻* → *H*₂), while showing high selectivity for carboxylic acids, in particular for formic acid.

The CO₂ rich electrolyte 265 may thus be depleted from the CO₂, while flowing over the cathode. The flow thus converts into a mixture of the second acid and the third acid. The mixture, which may leave the cathode chamber 320 via an optional CO₂ depleted electrolyte outlet 304, as well referred to as cathode chamber outlet 304. This mixture can as well be referred to as CO₂-depleted third acid 305. Of course, if the second and third acids are selected to be identical, one cannot chemically distinguish which molecule was already provided to the scrubber 260 and which molecule has been produced by reducing dissolved CO₂ (physical methods, however, allow to: for example, mass spectroscopy could distinguish the molecules by using different carbon isotopes for the different starting materials provided to the scrubber).

The optional reduction in the cathode chamber 320 can be summarized as

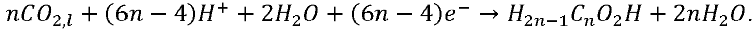

Preferably, the temperature of the protonic electrolyte is set to a value θ°C which is above the freezing point of the protonic electrolyte. For example, θ∈{-30, -20, -10, 0, 10, 20, 30, 35, 40, 45, 50, 55, 60, 65, 70}. An upper limit is provided by the boiling temperature of the electrolyte at the given pressure. A preferred range of θ is about 40 to 80, i.e., 40°C≤θ°C≤80°C, particularly preferred is 50°C≤θ°C≤60C. In this temperature range, electrochemically splitting of CO₂ to carboxylic acid and O₂ is enthalpy-wise preferred over the competitive hydrogen evolution reaction. The optional reduction preferably takes place at slightly elevated temperatures to thermodynamically favor the CO₂ reduction to the third acid over the generation of H₂. Slightly elevated means in this context elevated by a positive value θ° above standard conditions (commonly "STP": 273.15 K, 1.000hPa), preferably, θ∈{30, 35, 40, 45, 50, 55, 60, 65, 70}. An upper limit is provided by the boiling temperature of the electrolyte (i.e., the second acid) at the given pressure. The lower limit is given by the freezing temperature of the electrolyte. A preferred range of θ is about 40°C to 80°C, i.e., 40°C≤θ°≤80°C, particularly preferred is 50°C≤θ°≤60°C. This temperature range can be obtained by prewarming the second acid upstream of the cathode chamber 320, e.g., upstream of the scrubber 260. An optional second heater may be or comprise a heat exchanger being provided with heat being recuperated at another part of the apparatus or another plant. An example of such heat recuperation is the use of heat being withdrawn from clinker cooler exhaust gas and/or the heat being removed from the stream305 leaving the cathode chamber outlet 304 by another optional heat exchanger for cooling the stream305.

The optional electrolytic cell 300 may further comprise an optional anode chamber 330. The optional anode chamber 330 has an anode and may be separated from the cathode chamber by the optional cation (e.g., proton) permeable membrane 355. The anode chamber 330 serves as cation (proton) source for the reduction of the dissolved CO₂ at the cathode to the second acid in the cathode chamber 320. Due to the electric potential between the anode and the cathode, H₂O molecules are split into 2H⁺ and O²⁻. Two O²⁻ anions are oxidized at the anode into O₂ (2*H*₂*O* → *O*₂ + 4*H⁺* + 4*e*⁻). The O₂ is another secondary product of the cement clinker line and may leave the anode chamber via exit 303, which may as well comprise H₂O. The stream may be cooled using a heat exchanger and separated from the stream in a gas-liquid separator. The such obtained H₂O may be cycled and provided to the anode chamber 330, preferably, after being heated by a further heater. This further heater may as well be a part of a heat exchanger being sourced by recuperated process heat. The O₂ produced at the anode may be used, e.g., to replace combustion air in a kiln 400, e.g., to replace at least in part oxygen being provided as primary air to the burner of the kiln, to thereby reduce the amount of N₂ in the exhaust gas 269 of the kiln. This reduction thus decreases the total amount of exhaust gas 269 and at the same time increases the CO₂-concentration on the exhaust gas 269. The exhaust gas 269 may hence be used as CO₂-source being provided as well to the scrubber's CO₂ inlet 261. Of course, the exhaust gas 269 is preferably dedusted and cooled prior to providing it to the scrubber 260. Other purification steps may as well be advantageous.

FIG. 2 is very similar to FIG. 1; hence the same reference numerals are used where appropriate: The apparatus of FIG. 1 comprises an optional crusher 20 being configured to provide crushed concrete 25 directly and/or via a mill to a reactor 100. It is not important if, how or where hydrated concrete is subjected to comminution, all that is required is that a material comprising hydrated cement is provided to a reactor 100.

The reactor 100 may comprise a preextractor 110 and/or an extractor 112. Preferably the reactor 100 further comprises a filtration unit 114 and/or a washer 116.

In the optional preextractor 110 and in the optional extractor 112, the hydrated cement comprising material 25 may be contacted with a first acid, preferably with methanoic acid or a mixture comprising at least methanoic acid, to thereby react hydrated cement comprised in the hydrated cement comprising material 25 with the first acid 11. In a preferred example, the first acid 11 is an aqueous acid carbon acid as shown. The example CCOOH of the first acid and the example (70wt%) shall be considered as preferred examples only. The first acid 11 can of course be altered as explained above and the concentration can as well be altered in a huge range.

The extract obtained in the reactor 100 is a first fluid phase 145. The first fluid phase 145 is a calcium salt rich solution. In the preferred example of reacting the crushed concrete with methanoic acid, the calcium salt rich solution is a calcium formate (Ca(HCOO)₂) rich solution. The adjective "rich" is for illustrative purposes only in this context and can be omitted or replaced by "comprising". Nevertheless, it may be understood that the calcium salt concentration in the solution is greater than in the stream of the first acid 11 being provided to reactor. Preferably, the calcium salt concentration in the solution is at least 0.1*Mol*/*kg,* even more preferred at least one of 0.5, 1, 1.5 Mol/kg.

The residue of the extraction process can be withdrawn from the extractor via a washer 116 and is essentially a SiO₂- and CaCO₃ (rich) residue, which is herein referred to as first solid phase. The first solid phase may be classified (see classifier 130), e.g., by size in one or more gravel fractions, a sand fraction and a fine fraction which may be used for example as aggregates, e.g., in a concrete plant.

The calcium salt rich fraction 145 (i.e., the first fluid phase 145) may be provided to a concentrator 120. Accordingly, the concentrator 120 may comprise a first fluid phase inlet 121. In the concentrator 1210, at least a portion of the water and the first acid are removed from the first fluid phase 145. The water and the first acid may be reused in the reactor 100, for example in the washer 116 and/or in at least one of the (pre)extractor portions 110, 112. Due to the increased concentration of the calcium salt and the removal of the first acid, the calcium salt precipitates and can be removed via a solid calcium salt outlet 123. If using methanoic acid as first acid, the calcium salt is calcium formate. Correspondingly, the concentrator provides via outlet 123 calcium salt rich solid (typically a powder). The brine is typically a solution of K-, Mg- and Na-salts that can be withdrawn from the process and used as a in other applications, e.g., as a deicing agent.

At least a portion of this calcium salt rich solid may be added to pozzolane based cement as a curing activator. In addition or alternatively, the calcium salt rich solid (or another fraction thereof) may be provided to a calcium-salt inlet 181 of a heater 180 or to a cement clinker line 420.

If provided to the heater 180, the calcium salt may be heated to its decomposition temperature to thereby produce CaO, an aldehyde, water and/or H₂. The gaseous components are preferably removed from the heater 180 to thereby reduce the amount of CaO reacting with the other components to CaCO₃. The CaO can as well be used as an activation agent for pozzolane based cements and/or provided to a raw meal inlet of a cement clinker plant 420.

The aldehyde withdrawn from the heater is valuable base chemical and can be further processed to different other chemicals as indicated by box 190.

### List of reference numerals

- 10: concrete (optional) / hydrated cement comprising material
- 11: first acid
- 20: crusher (optional) / hydrated cement source
- 21: mill
- 25: crushed concrete
- 60: classifier (optional)
- 61: hydrated cement outlet / fine material outlet(optional)
- 62: aggregate outlet(s) /coarse material outlet (optional)
- 65: connection between hydrated cement source and hydrated cement inlet (optional)
- 66: aggregate rich fraction / coarser fraction
- 100: reactor (optional)
- 101: first acid inlet (optional)
- 102: hydrated cement inlet (optional)
- 103: first solid phase outlet (optional)
- 104: reactor outlet, e.g., dissolved calcium salt fluid phase outlet (optional)
- 105: connection of first solid phase outlet with 141
- 110: preextractor
- 112: extractor
- 114: filter
- 116: washer
- 118: mixer
- 120: concentrator
- 121: first fluid phase inlet
- 123: calcium salt outlet
- 140: separator (optional)
- 141: connection of reactor's fluid phase outlet with heater inlet
- 145: first fluid phase (optional)
- 146: first solid phase (optional)
- 180: heater (optional)
- 181: calcium salt inlet /first fluid phase inlet (optional)
- 182: a first fluid phase outlet (optional)
- 183: CaO-outlet / CaO rich fraction outlet (optional)
- 184: a second fluid phase outlet (optional) and
- 185: second fluid phase (optional)
- 186: CaO-rich fraction / second solid phase (optional)
- 220: condenser (optional)
- 221: gas inlet (optional)
- 222: CO₂-rich gas outlet/ gas outlet (optional)
- 223: liquid outlet / condensed fluid outlet, e.g. water outlet (optional)
- 224: liquid outlet / condensed fluid outlet, e.g. aldehyde outlet (optional)
- 260: scrubber (optional)
- 261: CO₂ rich gas inlet (optional)
- 262: second acid inlet / electrolyte inlet (optional)
- 263: CO₂ enriched electrolyte outlet (optional)
- 265: connection of scrubber's CO2-rich fluid outlet with CO2-rich fluid inlet of electrolytic cell (optional)
- 269: stream of exhaust gas / e.g., connection to kiln exhaust (optional)
- 300: electrolytic cell (optional)
- 301: CO₂ enriched electrolyte inlet (optional)
- 302: third acid outlet/ CO₂ depleted electrolyte outlet 301 (optional)
- 305: connection between CO₂ depleted electrolyte outlet 301 (third acid outket301) of the electrolytic cell 300 with first acid inlet 101 of reactor
- 355: membrane (optional)
- 320: anode chamber (optional)
- 330: cathode chamber (optional)
- 400: kiln (optional)
- 401: kiln material inlet (optional)
- 402: kiln exhaust gas outlet (optional)
- 405: clinker stream (e.g. connection to clinker cooler) (optional)
- 420: cement clinker plant (optional)

## Claims

1. A method for manufacturing a calcium oxide comprising material, the method comprising at least:
- reacting hydrated cement (65), a calcium-containing slag and/or calcium-containing mineral with a carboxylic first acid (11), thereby obtaining a first fluid phase (145) comprising a dissolved calcium salt of the first acid (11) and a Ca-depleted first solid phase (146), and
- heating at least a portion of the calcium salt to its thermal decomposition temperature, thereby obtaining at least a CaO-comprising second solid phase (186) and a second fluid phase (185) comprising at least CO₂ and an aldehyde corresponding to the first acid,
- withdrawing the aldehyde from the second solid phase (186) and the second fluid phase (185).

2. The method of to claim 1, **characterized in, that**
crushed concrete comprising sand and/or gravel and/or crushed stone and hydrated cement is classified prior to the reacting step to remove by the classification at least a portion of sand and/or gravel and/or crushed stone from the hydrated cement, which hydrated cement is subsequently reacted at least in part with the first acid (11) to the first fluid phase (145), and/or **in that** the method further comprises a step of concentrating at least a portion of the first fluid phase (145) prior to the heating step, thereby obtaining a liquid brine, a gaseous first acid and the calcium salt in a solid state.

3. The method of claim 1 or 2, **characterized in that** at least a portion of the first fluid phase (145) is concentrated thereby obtaining a liquid brine, a gaseous first acid and the calcium salt in a solid state and **in that** the thereby obtained calcium salt is heated in the heating step as defined in claim 1.

4. The method of one of the previous claims, **characterized in that** it further comprises separating the dissolved calcium salt and the first solid phase prior to the step of heating the calcium salt and/or prior to the step of concentrating the first fluid phase.

5. The method of one of the previous claims, **characterized in that** it further comprises dissolving the CO₂ obtained in the heating step in a second acid and using the second acid as an electrolyte in an electrolytic cell 300 to thereby convert the CO₂ to a third acid.

6. The method of claim 5, **characterized in that** the second acid and the third acid are chemically identical to the first acid.

7. The method of one the previous claims, **characterized in that** it further comprises using the third acid obtained by converting the CO₂ as first acid in the reacting step of claim 1 and/or as second acid in the dissolving step of claim 5.

8. The method of one of the previous claims, **characterized in that** the first, second and/or third acid is methanoic acid, ethanoic acid, propionic acid, butanoic acid and/or pentanoic acid and/or oxalic acid, propanedioic acid, butanedioic acid, pentanedioic acid, hexanedioic acid, 2,3-Dihydroxybutanedioic acid, amino acids with an isoelectric point at or below pH7

9. A method for manufacturing cement clinker, comprising at least the method of one of the previous claims and the step of providing the CaO-comprising phase and/or the calcium salt to a cement clinker kiln (400).

10. An apparatus for manufacturing calcium oxide comprising material and an aldehyde, the apparatus comprising at least a reactor (100) having a hydrated cement inlet (102) being connected to a hydrated cement source (20,60) and/or a calcium containing slag source and/or a calcium-containing mineral source, a first acid inlet (101) being connected to a first carboxylic acid source (300), a first solid phase outlet (103) and a dissolved calcium salt fluid phase outlet (104),
and at least:
- a heater (180) having:
∘ a calcium salt fluid phase inlet (181) being connected to the dissolved calcium salt fluid phase outlet (104) and/or the solid calcium salt outlet,
∘ a second fluid phase outlet (184) and
∘ a CaO outlet (183).

11. The apparatus of the previous apparatus claim, **characterized in that** the apparatus further comprises:
- a concentrator having:
∘ a dissolved calcium salt fluid phase inlet (181) being connected to the dissolved calcium salt fluid phase outlet (104),
∘ a liquid brine outlet, a gaseous first acid outlet and the solid calcium salt outlet, wherein the concentrator is configured to increase the concentration of a first fluid phase received via the dissolved calcium salt fluid phase inlet (181) to thereby obtain liquid brine, first acid outlet in a gaseous state and precipitated calcium salt of the first acid, and/or **in that**
- the crushed concrete inlet (102) of the reactor (100) is connected to the crushed concrete source (20) via a classifier (60),
- the classifier (60) has a crushed concrete inlet being connected to the crushed concrete source (20), a coarse material outlet (61) and a fine material outlet (62),
- the fine material outlet (61) is connected to the hydrated cement inlet (102) of the reactor (100).

12. The apparatus of one of the previous apparatus claims, **characterized in that**:
- the apparatus comprises a scrubber (260),
- the scrubber comprises a CO₂ inlet (261), an electrolyte inlet (262) and a CO₂ enriched electrolyte outlet (263),
- the second fluid phase outlet (184) is connected to the CO₂ inlet (261),
- the scrubber (260) is configured to dissolve CO₂ received via the CO₂ inlet (261) in an electrolyte being received via the electrolyte inlet (262) and to provide a CO₂ enriched electrolyte at the CO₂ enriched electrolyte outlet.

13. The apparatus of the previous apparatus claim, **characterized in that**:
- the CO₂ inlet (261) is connected via a condenser (220) to the second fluid phase outlet (184),
- the condenser (220) comprises:
∘ a condenser inlet (221) being connected to the second fluid phase outlet (184),
∘ a condensed fluid outlet (223, 224), and
∘ a gas outlet (222) being connected to the CO₂ inlet (261).
- the second fluid phase further comprises at least one of an aldehyde and/or H₂O,
- the condenser (220) is configured to cool the second fluid phase being received via the condenser inlet (221) to a temperature at or below the condensation temperature of *H*₂*O* and/or the aldehyde and above the condensation temperature of *CO*₂.

14. The apparatus of one the two previous apparatus claims, **characterized in that**:
- the apparatus further comprises an electrolytic cell (300),
- the electrolytic cell (300) has a CO₂ enriched electrolyte inlet (301) being connected to the CO₂ enriched electrolyte outlet (263) and a CO₂ depleted electrolyte outlet (304),
- the electrolytic cell (300) is configured to convert dissolved CO₂ being received via the CO₂ enriched electrolyte inlet (301) into a third acid being provided to the CO₂ depleted electrolyte outlet (304).

15. The apparatus of the previous claim, **characterized in that** the CO₂ depleted electrolyte outlet (304) is connected to the first acid inlet (101) of the reactor (100) and/or to the electrolyte inlet (262) of the scrubber (260).

16. The apparatus of one of the previous apparatus claims, **characterized in that**:
- the CaO outlet (183) of the heater (180) and/or the first solid phase outlet are/is connected to raw meal inlet of cement clinker kiln and/or
- the coarse material outlet (61) is connected, optionally via a second classifier, to at least one aggregate inlet of an aggregate batcher of a concrete plant.

## Patentansprüche

1. Ein Verfahren zur Herstellung eines Calciumoxid aufweisenden Materials, wobei das Verfahren mindestens Folgendes aufweist:
- Reagieren von hydratisiertem Zement (65), einer Calcium-haltigen Schlacke und/oder eines Calcium-haltigen Minerals mit einer ersten Carbonsäure (11), wodurch eine erste fluide Phase (145), die ein gelöstes Calciumsalz der ersten Säure (11) aufweist, und eine Ca-abgereicherte erste feste Phase (146) erhalten wird, und
- Erhitzen zumindest eines Teils des Calciumsalzes (145) auf seine thermische Zersetzungstemperatur, wodurch zumindest eine CaO-haltige zweite feste Phase (186) und eine zweite fluide Phase (185), die zumindest CO₂ und ein Aldehyd entsprechend zur ersten Säure aufweist,
- Abziehen des Aldehyds von der zweiten festen Phase (186) und der zweiten fluiden Phase (185).

2. Das Verfahren nach Anspruch 1, **dadurch gekennzeichnet, dass** Betonbruch, der Sand und/oder Kies und/oder Schotter und hydratisierten Zement aufweist, vor dem Reaktionsschritt klassifiziert wird, um durch die Klassifizierung zumindest einen Teil Sand und/oder Kies und/oder Schotter aus dem hydratisierten Zement zu entfernen, wobei der hydratisierte Zement anschließend zumindest teilweise mit der ersten Säure (11) zur ersten fluiden Phase (145) reagieren gelassen wird,
und/oder dass das Verfahren weiterhin einen Schritt des Konzentrierens zumindest eines Teils der ersten fluiden Phase (145) vor dem Schritt des Erhitzens aufweist, wodurch eine flüssige Salzlösung, eine gasförmige erste Säure und das Calciumsalz in einem festen Zustand erhalten werden.

3. Das Verfahren nach Anspruch 1 oder 2, **dadurch gekennzeichnet, dass** zumindest ein Teil der ersten fluiden Phase (145) konzentriert wird, wodurch eine flüssige Salzlösung, eine gasförmige erste Säure und das Calciumsalz in festem Zustand erhalten wird, und dass das dadurch erhaltene Calciumsalz im Erhitzungsschritt wie in Anspruch 1 definiert erhitzt wird.

4. Das Verfahren nach einem der vorhergehenden Ansprüche, **dadurch gekennzeichnet, dass** es weiterhin Trennen des gelösten Calciumsalzes und der ersten festen Phase vor dem Schritt des Erhitzens des Calciumsalzes und/oder vor dem Schritt des Konzentrierens der ersten fluiden Phase aufweist.

5. Das Verfahren nach einem der vorhergehenden Ansprüche, **dadurch gekennzeichnet, dass** es ferner Auflösen des im Erhitzungsschritt erhaltenen CO₂ in einer zweiten Säure und Verwenden der zweiten Säure als ein Elektrolyt in einer Elektrolysezelle 300 aufweist, um dadurch das CO₂ in eine dritte Säure umzuwandeln.

6. Das Verfahren nach Anspruch 5, **dadurch gekennzeichnet, dass** die zweite Säure und die dritte Säure chemisch identisch mit der ersten Säure sind.

7. Das Verfahren nach einem der vorhergehenden Ansprüche, **dadurch gekennzeichnet, dass** es weiterhin Verwenden der durch Umwandeln des CO₂ erhaltenen dritten Säure als erste Säure im Reaktionsschritt von Anspruch 1 und/oder als zweite Säure im Auflösungsschritt von Anspruch 5 aufweist.

8. Das Verfahren nach einem der vorhergehenden Ansprüche, **dadurch gekennzeichnet, dass** die erste, zweite und/oder dritte Säure Methansäure, Ethansäure, Propionsäure, Buttersäure und/oder Pentansäure und/oder Oxalsäure, Propandisäure, Butandisäure, Pentandisäure, Hexandisäure, 2,3-Dihydroxybutandisäure, Aminosäuren mit einem isoelektrischen Punkt bei oder unter pH 7 ist.

9. Ein Verfahren zum Herstellen von Zementklinker, das zumindest das Verfahren nach einem der vorhergehenden Ansprüche und den Schritt des Zuführens der CaO-haltigen Phase und/oder des Calciumsalzes zu einem Zementklinkerofen (400) aufweist.

10. Eine Vorrichtung zum Herstellen von Calciumoxid enthaltendem Material und einem Aldehyd, wobei die Vorrichtung zumindest einen Reaktor (100) mit einem Einlass für hydratisierten Zement (102) aufweist, der mit einer Quelle für hydratisierten Zement (20, 60) und/oder einer Quelle für Calciumhaltige Schlacke und/oder einer Quelle für ein Calcium-haltiges Mineral verbunden ist, einem Einlass für eine erste Säure (101), der mit einer Quelle für eine erste Carbonsäure (300) verbunden ist, einem Auslass für die erste feste Phase (103) und einem Auslass für eine fluide Phase des gelösten Calciumsalzes (104) aufweist,
und mindestens:
- einen Erhitzer (180) mit:
∘ einem Einlass für die fluide Phase des Calciumsalzes (181), der mit dem Auslass für die fluide Phase des gelösten Calciumsalzes (104) und/oder dem Auslass für das feste Calciumsalz verbunden ist,
∘ einem Auslass für eine fluide Phase (184) und
∘ einem CaO Auslass (183).

11. Die Vorrichtung des vorhergehenden Vorrichtungsanspruchs, **dadurch gekennzeichnet, dass** die Vorrichtung weiterhin aufweist:
- einen Konzentrator mit:
∘ einem Einlass für die fluide Phase des gelösten Calciumsalzes (181), der mit Auslass für die fluide Phase des gelösten Calciumsalzes (104) verbunden ist,
∘ einem Auslass für die flüssige Salzlösung, einem Auslass für die gasförmige erste Säure und dem Auslass für festes Calciumsalz, wobei der Konzentrator so konfiguriert ist, dass er die Konzentration einer über den Einlass für die fluide Phase des gelösten Calciumsalzes (181) empfangenen ersten fluiden Phase erhöht, um dadurch flüssige Salzlösung, eine Ausgabe der ersten Säure in gasförmigem Zustand und ausgefälltes Calciumsalz der ersten Säure zu erhalten, und/oder dass
- der Betonbrucheinlass (102) des Reaktors (100) über einen Sichter (60) mit der Betonbruchquelle (20) verbunden ist,
- der Sichter (60) einen mit der Betonbruchquelle (20) verbundenen Betonbrucheinlass, einen Grobmaterialauslass (61) und einen Feinmaterialauslass (62) aufweist,
- der Feinmaterialauslass (61) mit dem Einlass für hydrierten Zement (102) des Reaktors (100) verbunden ist.

12. Die Vorrichtung nach einem der vorhergehenden Vorrichtungsansprüche, **dadurch gekennzeichnet, dass**:
- die Vorrichtung einen Wäscher (260) aufweist,
- der Wäscher einen CO₂-Einlass (261), einen Elektrolyt-Einlass (262) und einen Auslass für CO₂-angereichertes Elektrolyt (263) aufweist,
- der Auslass für die zweite fluide Phase (184) mit dem CO₂-Einlass (261) verbunden ist,
- der Wäscher (260) so konfiguriert ist, dass er CO₂, das über den CO₂-Einlass (261) empfangen wird, in einem Elektrolyt löst, das über den Elektrolyt-Einlass (262) empfangen wird, und ein CO₂-angereichertes Elektrolyt an dem Auslass für CO₂-angereichertes Elektrolyt bereitstellt.

13. Die Vorrichtung des vorhergehenden Vorrichtungsanspruchs, **dadurch gekennzeichnet, dass**:
- der CO₂-Einlass (261) über einen Kondensator (220) mit dem Auslass für die zweite fluide Phase (184) verbunden ist,
- der Kondensator (220) aufweist:
∘ einen Kondensatoreinlass (221), der mit dem Auslass für die zweite fluide Phase (184) verbunden ist,
∘ einen Auslass für kondensiertes Fluid (223, 224), und
∘ ein Gasauslass (222), der mit dem CO₂-Einlass (261) verbunden ist,
- die zweite fluide Phase weiterhin mindestens eines von einem Aldehyd und/oder H₂O aufweist,
- der Kondensator (220) so konfiguriert ist, dass er die über den Kondensatoreinlass (221) empfangene zweite fluide Phase auf eine Temperatur abkühlt, die bei oder unter der Kondensationstemperatur von H₂O und/oder dem Aldehyd und über der Kondensationstemperatur von CO₂ liegt.

14. Die Vorrichtung nach einem der beiden vorhergehenden Vorrichtungsansprüche, **dadurch gekennzeichnet, dass**:
- die Vorrichtung weiterhin eine Elektrolysezelle (300) aufweist,
- die Elektrolysezelle (300) einen Einlass für CO₂-angereichertes Elektrolyt (301) aufweist, der mit dem Auslass für CO₂-angereichertes Elektrolyt (263) verbunden ist, sowie einen Auslass für CO₂-abgereichertes Elektrolyt (304) aufweist,
- die Elektrolysezelle (300) so konfiguriert ist, dass sie gelöstes CO₂, das über den Einlass für CO₂-angereichertes Elektrolyt (301) zugeführt wird, in eine dritte Säure umwandelt, die dem Auslass für CO₂-abgereichertes Elektrolyt (304) zugeführt wird.

15. Die Vorrichtung nach dem vorhergehenden Anspruch, **dadurch gekennzeichnet, dass** der Auslass für CO₂-abgereichertes Elektrolyt (304) mit dem Einlass für die erste Säure (101) des Reaktors (100) und/oder mit dem Elektrolyt-Einlass (262) des Wäschers (260) verbunden ist.

16. Die Vorrichtung nach einem der vorhergehenden Vorrichtungsansprüche, **dadurch gekennzeichnet, dass**:
- der CaO-Auslass (183) des Erhitzers (180) und/oder der Auslass für die erste feste Phase mit dem Rohmehleinlass des Zementklinkerofens verbunden ist/sind, und/oder
- der Grobmaterialauslass (61), optional über einen zweiten Sichter, mit mindestens einem Aggregateinlass eines Aggregatdosierers eines Betonwerks verbunden ist.

## Revendications

1. Procédé de fabrication d'un matériau comprenant de l'oxyde de calcium, le procédé comprenant au moins :
- le fait de faire réagir du ciment hydraté (65), un laitier contenant du calcium et/ou un minéral contenant du calcium avec un premier acide carboxylique (11), obtenant ainsi une première phase fluide (145) comprenant un sel de calcium dissous du premier acide (11) et une première phase solide appauvrie en Ca (146), et
- le chauffage d'au moins une portion du sel de calcium jusqu'à sa température de décomposition thermique, obtenant ainsi au moins une deuxième phase solide (186) comprenant du CaO et une deuxième phase fluide (185) comprenant au moins du CO₂ et un aldéhyde correspondant au premier acide,
- le retrait de l'aldéhyde de la deuxième phase solide (186) et de la deuxième phase fluide (185).

2. Procédé selon la revendication 1, **caractérisé en ce que**
du béton concassé comprenant du sable et/ou du gravier et/ou de la pierre concassée et du ciment hydraté est classifié avant l'étape de réaction afin d'éliminer par la classification au moins une portion du sable et/ou du gravier et/ou de la pierre concassée du ciment hydraté, lequel ciment hydraté est ensuite mis à réagir au moins en partie avec le premier acide (11) pour donner la première phase fluide (145),
et/ou **en ce que** le procédé comprend en outre une étape de
concentration d'au moins une portion de la première phase fluide (145) avant l'étape de chauffage, obtenant ainsi une saumure liquide, un premier acide gazeux et le sel de calcium à l'état solide.

3. Procédé selon la revendication 1 ou 2, **caractérisé en ce qu'**au moins une portion de la première phase fluide (145) est concentrée, obtenant ainsi une saumure liquide, un premier acide gazeux et le sel de calcium à l'état solide, et **en ce que** le sel de calcium ainsi obtenu est chauffé à l'étape de chauffage telle que définie dans la revendication 1.

4. Procédé selon l'une des revendications précédentes, **caractérisé en ce qu'**il comprend en outre la séparation du sel de calcium dissous et de la première phase solide avant l'étape de chauffage du sel de calcium et/ou avant l'étape de concentration de la première phase fluide.

5. Procédé selon l'une des revendications précédentes, **caractérisé en ce qu'**il comprend en outre la dissolution du CO₂ obtenu à l'étape de chauffage dans un deuxième acide et l'utilisation du deuxième acide comme électrolyte dans une cellule électrolytique 300 afin de convertir ainsi le CO₂ en un troisième acide.

6. Procédé selon la revendication 5, **caractérisé en ce que** le deuxième acide et le troisième acide sont chimiquement identiques au premier acide.

7. Procédé selon l'une des revendications précédentes, **caractérisé en ce qu'**il comprend en outre l'utilisation du troisième acide obtenu par conversion du CO₂ comme premier acide à l'étape de réaction de la revendication 1 et/ou comme deuxième acide à l'étape de dissolution de la revendication 5.

8. Procédé selon l'une des revendications précédentes, **caractérisé en ce que** le premier, le deuxième et/ou le troisième acide sont l'acide méthanoïque, l'acide éthanoïque, l'acide propionique, l'acide butanoïque et/ou l'acide pentanoïque et/ou l'acide oxalique, l'acide propanedioïque, l'acide butanedioïque, l'acide pentanedioïque, l'acide hexanedioïque, l'acide 2,3-dihydroxybutanedioïque, des acides aminés ayant un point isoélectrique au pH 7 ou en dessous.

9. Procédé de fabrication de clinker de ciment, comprenant au moins le procédé de l'une des revendications précédentes et l'étape de fourniture de la phase comprenant du CaO et/ou le sel de calcium à un four à clinker de ciment (400).

10. Appareil pour la fabrication d'un matériau comprenant de l'oxyde de calcium et d'un aldéhyde, l'appareil comprenant au moins un réacteur (100) ayant une entrée de ciment hydraté (102) qui est reliée à une source de ciment hydraté (20, 60) et/ou une source de laitier contenant du calcium et/ou une source de minéraux contenant du calcium, une première entrée d'acide (101) qui est reliée à une première source d'acide carboxylique (300), une première sortie de phase solide (103) et une sortie de phase fluide de sel de calcium dissous (104),
et au moins :
- un dispositif de chauffage (180) comportant :
∘ une entrée de phase fluide de sel de calcium (181) qui est reliée à la sortie de phase fluide de sel de calcium dissous (104) et/ou à la sortie de sel de calcium solide,
∘ une deuxième sortie de phase fluide (184) et
∘ une sortie de CaO (183).

11. Appareil selon la revendication d'appareil précédente, **caractérisé en ce que** l'appareil comprend en outre :
- un concentrateur comportant :
∘ une entrée de phase fluide de sel de calcium dissous (181) qui est reliée à la sortie de phase fluide de sel de calcium dissous (104),
∘ une sortie de saumure liquide, une sortie de premier acide gazeux et la sortie de sel de calcium solide, dans lequel le concentrateur est configuré pour augmenter la concentration d'une première phase fluide reçue via l'entrée de phase fluide de sel de calcium dissous (181) afin d'obtenir ainsi une saumure liquide, une sortie de premier acide dans un état gazeux et un sel de calcium précipité du premier acide, et/ou **en ce que**
- l'entrée de béton concassé (102) du réacteur (100) est reliée à la source de béton concassé (20) via un classificateur (60),
- le classificateur (60) comporte une entrée de béton concassé qui est reliée à la source de béton concassé (20), une sortie de matériaux grossiers (61) et une sortie de matériaux fins (62),
- la sortie de matériaux fins (61) est reliée à l'entrée de ciment hydraté (102) du réacteur (100).

12. Appareil selon l'une des revendications d'appareil précédentes, **caractérisé en ce que** :
- l'appareil comprend un épurateur (260),
- l'épurateur comprend une entrée de CO₂ (261), une entrée d'électrolyte (262) et une sortie d'électrolyte enrichi en CO₂ (263),
- la sortie de la deuxième phase fluide (184) est reliée à l'entrée de CO₂ (261),
- l'épurateur (260) est configuré pour dissoudre du CO₂ reçu via l'entrée de CO₂ (261) dans un électrolyte qui est reçu via l'entrée d'électrolyte (262) et pour fournir un électrolyte enrichi en CO₂ au niveau de la sortie d'électrolyte enrichi en CO₂.

13. Appareil selon la revendication d'appareil précédente, **caractérisé en ce que** :
- l'entrée de CO₂ (261) est reliée via un condenseur (220) à la deuxième sortie de phase fluide (184),
- le condenseur (220) comprend :
∘ une entrée de condenseur (221) qui est reliée à la sortie de deuxième phase fluide (184),
∘ une sortie de fluide condensé (223, 224), et
∘ une sortie de gaz (222) qui est reliée à l'entrée de CO₂ (261).
- la deuxième phase fluide comprend en outre au moins un parmi un aldéhyde et/ou du H₂O,
- le condenseur (220) est configuré pour refroidir la deuxième phase fluide qui est reçue via l'entrée de condenseur (221) jusqu'à une température égale à ou en dessous de la température de condensation de *H₂O* et/ou de l'aldéhyde et au-dessus de la température de condensation de CO₂.

14. Appareil selon l'une des deux revendications d'appareil précédentes, **caractérisé en ce que** :
- l'appareil comprend en outre une cellule électrolytique (300),
- la cellule électrolytique (300) comporte une entrée d'électrolyte enrichi en CO₂ (301) qui est reliée à la sortie d'électrolyte enrichi en CO₂ (263) et une sortie d'électrolyte appauvri en CO₂ (304),
- la cellule électrolytique (300) est configurée pour convertir du CO₂ dissous qui est reçu via l'entrée d'électrolyte enrichi en CO₂ (301) en un troisième acide qui est fourni à la sortie d'électrolyte appauvri en CO₂ (304).

15. Appareil selon la revendication précédente, **caractérisé en ce que** la sortie d'électrolyte appauvri en CO₂ (304) est reliée à la première entrée d'acide (101) du réacteur (100) et/ou à l'entrée d'électrolyte (262) de l'épurateur (260).

16. Appareil selon l'une des revendications d'appareil précédentes, **caractérisé en ce que** :
- la sortie de CaO (183) du dispositif de chauffage (180) et/ou la première sortie de phase solide est/sont reliée(s) à une entrée de farine crue du four à clinker de ciment et/ou
- la sortie de matériaux grossiers (61) est reliée, facultativement via un deuxième classificateur, à au moins une entrée d'agrégat d'un doseur d'agrégat d'une centrale à béton.
